# EUROPÄISCHE PATENTANMELDUNG

(11) **EP 3 075 470 A1**
(43) Veröffentlichungstag der Anmeldung: **05.10.2016**
(21) Anmeldenummer: 15000936.3
(22) Anmeldetag: 31.03.2015
(51) Int. Cl.: B22F 3/105

(54) **VERFAHREN ZUM SCHICHTWEISEN HERSTELLEN EINES METALLISCHEN WERKSTÜCKS DURCH LASERUNTERSTÜTZTE ADDITIVE FERTIGUNG**

(71) Anmelder: Linde Aktiengesellschaft, 80331 München (DE)
(72) Erfinder: Foret, Pierre, 80796 München (DE)
(74) Vertreter: Imhof, Dietmar

(57) **Zusammenfassung**

Die Erfindung betrifft ein Verfahren zum schichtweisen Herstellen eines metallischen Werkstücks durch additive Fertigung, bei dem metallurgische Schichten des Werkstücks erzeugt werden, indem in einer Fertigungskammer für jede metallurgische Schicht jeweils ein metallischer Werkstoff bereitgestellt und mit einem Laserstrahl beaufschlagt wird, und bei dem bei der Beaufschlagung der Schichten des metallischen Werkstoffs in der Fertigungskammer eine Gasatmosphäre bereitgestellt wird. Erfindungsgemäß wird ein Teil der Gasatmosphäre als Gasstrom aus der Fertigungskammer abgezogen, zumindest ein Parameter des Gasstroms und/oder der Gasatmosphäre bestimmt und mit einem Sollwert verglichen. In Abhängigkeit von dem Vergleich des Parameters mit dem Sollwert werden der Gasstrom in die Fertigungskammer zurückgeführt und ein Prozessgas der Fertigungskammer zugeführt.

## Beschreibung

Die Erfindung betrifft ein Verfahren zum schichtweisen Herstellen eines metallischen Werkstücks durch laserunterstützte additive Fertigung, insbesondere durch Laserschmelzen in einer Fertigungskammer.

### Stand der Technik

Im Zuge generativer bzw. additiver Fertigungsverfahren kann ein dreidimensionaler Gegenstand bzw. ein Werkstück schichtweise aus einem metallischen Werkstoff hergestellt werden. Das hergestellte Werkstück setzt sich aus unterschiedlichen metallurgischen Schichten zusammen, die im Zuge des additiven Fertigungsverfahrens einzeln nacheinander erzeugt werden. Für jede dieser metallurgischen Schichten des Werkstücks kann der metallische Werkstoff beispielsweise in Pulverform aufgebracht und verfestigt werden. Zu diesem Zweck kann der aufgebrachte Werkstoff beispielsweise mit einem Laser- und/oder Elektronenstrahl beaufschlagt werden. Der Werkstoff kann auf diese Weise beispielsweise einem Sinter- oder Schmelzprozess unterzogen werden, wodurch der Werkstoff verfestigt wird. Nach Erzeugen einer metallurgischen Schicht kann die nächste Schicht auf analoge Weise erzeugt werden.

Je nach Anwendungsgebiet werden additive Fertigungsverfahren auch als Rapid Prototyping bezeichnet. Im Zuge eines Rapid Prototypings können beispielsweise Werkzeuge, Werkstücke oder Bauelemente für unterschiedliche Zwecke hergestellt werden. Additive Fertigungsverfahren können in unterschiedlichen Gebieten Anwendung finden, beispielsweise in der Architektur, im Maschinenbau, in der Luft- und Raumfahrt, in der Medizintechnik oder in der Automobilindustrie.

Ein bekanntes additives Fertigungsverfahren ist das sogenannte Laserschmelzen (engl. Laser Melting oder Laser Sintering, LS). Eine Trägerplatte, auf der ein herzustellendes Werkstück Schicht für Schicht ausgebildet wird, ist hierbei zumeist in einer Fertigungskammer angeordnet. Der gesamte Fertigungsprozess findet in dieser Fertigungskammer statt. Das Laserschmelzen wird daher auch als Kammertechnik bezeichnet.

Die Fertigungskammer ist zumeist in sich geschlossen. In die Fertigungskammer kann eine Gasatmosphäre mit einer bestimmten Zusammensetzung eingebracht werden. Je nach gewählter Zusammensetzung der Gasatmosphäre in der Fertigungskammer kann der metallische Werkstoff beeinflusst werden.

Wenn für die Gasatmosphäre Inertgase gewählt werden, findet keine Reaktion mit dem metallischen Werkstoff statt. Für die Gasatmosphäre können jedoch auch Reaktivgase verwendet werden, welche mit dem metallischen Werkstoff reagieren können. Durch die Wahl der Gasatmosphäre können somit metallurgische Eigenschaften des Werkstücks verändert werden.

Bei additiven Fertigungsverfahren der erläuterten Art besteht oftmals die Gefahr, dass sich in dem Werkstück Poren bilden.

Es ist daher wünschenswert, ein entsprechendes Verfahren dahingehend zu verbessern, dass ein Werkstück ohne Poren hergestellt werden kann.

### Offenbarung der Erfindung

Diese Aufgabe wird durch ein Verfahren zum schichtweisen Herstellen eines Werkstücks durch laserunterstützte additive Fertigung, insbesondere Laserschmelzen, mit den Merkmalen des Patentanspruchs 1 gelöst. Vorteilhafte Ausgestaltungen sind Gegenstand der jeweiligen Unteransprüche sowie der nachfolgenden Beschreibung.

Das Laserschmelzen wird in einer Fertigungskammer durchgeführt. Das hergestellte Werkstück setzt sich aus unterschiedlichen metallurgischen Schichten zusammen, die einzeln nacheinander erzeugt werden. Die einzelnen metallurgischen Schichten des Werkstücks werden jeweils erzeugt, indem für jede metallurgische Schicht jeweils ein metallischer Werkstoff bereitgestellt und mit einem Laserstrahl beaufschlagt wird. Dies erfolgt unter einer Gasatmosphäre in der Fertigungskammer.

Das erfindungsgemäße Verfahren geht also von einem bekannten Verfahren aus, bei dem metallurgische Schichten eines Werkstücks erzeugt werden, indem in einer Fertigungskammer für jede metallurgische Schicht jeweils ein metallischer Werkstoff bereitgestellt und mit einem Laserstrahl beaufschlagt wird und bei der Beaufschlagung der Schichten des metallischen Werkstoffs in der Fertigungskammer eine Gasatmosphäre bereitgestellt wird.

Die einzelnen metallurgischen Schichten haben insbesondere eine Dicke im Bereich von 20 µm bis 100 µm. Der metallische Werkstoff kann beispielsweise in Pulverform oder in Form einer Stange oder eines Bandes aufgebracht werden. Das herzustellende Werkstück ist insbesondere auf einer Trägerplatte angeordnet. Nach Erzeugen einer metallurgischen Schicht wird die Trägerplatte insbesondere um die Dicke dieser erzeugten Schicht abgesenkt und die nächste Schicht wird auf analoge Weise erzeugt. Die Trägerplatte ist insbesondere in der Fertigungskammer angeordnet.

Der Laserstrahl kann beispielsweise von außen in die Fertigungskammer eingestrahlt werden oder ein entsprechender Laserkopf kann in der Fertigungskammer angeordnet sein. Der Laserstrahl kann insbesondere von einer Steuereinheit gesteuert werden. In dieser Steuereinheit können Daten wie beispielsweise CAD-Daten hinterlegt sein, welche das herzustellende Werkstück charakterisieren. Die Steuereinheit kann den Laserstrahl basierend auf diesen Daten ansteuern und über die Trägerplatte verfahren.

Man hat festgestellt, dass die mit den bekannten Verfahren dieser Art hergestellten Produkte teilweise Poren in ihrem Inneren aufweisen. Als eine Ursache für diese Poren wurde in der vorliegenden Erfindung vorausgehenden Versuchen der Einschluss von Sauerstoff in oder zwischen den metallurgischen Schichten erkannt. Die Erfinder haben im Wesentlichen zwei Quellen für diesen unerwünschten Sauerstoff ausgemacht: Zum einen dringt Sauerstoff durch Undichtigkeiten in die Fertigungskammer ein, zum anderen kann der metallische Werkstoff, aus dem das Werkstück hergestellt wird, Oxide enthalten, die Sauerstoff freisetzen.

Außerdem hat sich gezeigt, dass der Wasserdampfanteil in der Gasatmosphäre mit der Zeit ansteigt. Der erhöhte Wasserdampfanteil geht ursächlich auch auf unerwünschten Sauerstoff zurück.

Die Erfindung sieht daher vor, dass ein Teil der Gasatmosphäre als Gasstrom aus der Fertigungskammer abgezogen wird. Ein oder mehrere Parameter des Gasstroms und/oder der Gasatmosphäre werden bestimmt und jeweils mit einem Sollwert verglichen. Zum Beispiel kann der Wasserdampfgehalt des Gasstroms oder der Wasserdampfgehalt der Gasatmosphäre in der Fertigungskammer ermittelt werden und mit einem vorgegebenen Sollwert verglichen werden.

In Abhängigkeit von dem Ergebnis des Vergleichs des Parameters mit dem Sollwert wird der Gasstrom entweder vollständig, teilweise oder überhaupt nicht in die Fertigungskammer zurückgeführt. Umgekehrt wird in Abhängigkeit von dem Ergebnis des Vergleichs des Parameters mit dem Sollwert ein Prozessgas der Fertigungskammer zugeführt. In obigem Beispiel wird bei einer Abweichung des gemessenen Wasserdampfgehalts von dem Sollwert, beispielsweise einem zu hohen Wasserdampfgehalt, ein Teil des Gasstroms nicht mehr in die Fertigungskammer zurückgeführt, sondern verworfen oder einer anderweitigen Nutzung zugeführt. Anstelle des verworfenen Gasstroms wird ein Prozessgas, beispielsweise ein inerter Argonstrom, in die Fertigungskammer geleitet.

Vorzugsweise werden einer oder mehrere der folgenden Parameter des aus der Fertigungskammer abgezogenen Gasstroms bestimmt: Wasserdampfgehalt, Sauerstoffgehalt, Kohlenstoffgehalt oder dessen Temperatur. Alternativ oder ergänzend werden einer oder mehrere der folgenden Parameter der in der Fertigungskammer befindlichen Gasatmosphäre bestimmt: Wasserdampfgehalt, Sauerstoffgehalt, Kohlenstoffgehalt oder dessen Temperatur.

Für eine oder mehrere der metallurgischen Schichten des Werkstücks kann jeweils eine Gaszusammensetzung einer Gasatmosphäre in der Fertigungskammer verwendet werden. Die Gaszusammensetzung kann jedoch auch nach der Herstellung einer oder mehrerer metallurgischer Schichten verändert werden. Durch die jeweilige Gaszusammensetzung der Gasatmosphäre in der Fertigungskammer werden auch metallurgische Eigenschaften der jeweiligen metallurgischen Schichten des Werkstücks verändert. Die Gaszusammensetzung für die metallurgischen Schichten wird vorzugsweise jeweils derart gewählt, dass sich metallurgische Eigenschaften jeweils benachbarter metallurgischer Schichten des Werkstücks jeweils nach vorgegebenen Kriterien verändern.

Hierzu werden für unterschiedliche Prozessphasen unterschiedliche Sollwerte vorgesehen. Das heißt für eine bestimmte Anzahl von aufeinander folgenden metallurgischen Schichten wird ein erster Sollwert gewählt und für bestimmte andere metallurgische Schichten wird ein anderer Sollwert gewählt. So wird beispielsweise für einige metallurgische Schichten ein höherer Sauerstoffanteil in der Gasatmosphäre erlaubt als für andere metallurgische Schichten.

Die Gaszusammensetzung wird jeweils insbesondere derart gewählt, dass sich metallurgische Eigenschaften jeweils benachbarter metallurgischer Schichten des Werkstücks insbesondere nicht schlagartig verändern, weiter insbesondere kontinuierlich bzw. graduell verändern und dass weiter insbesondere keine "Sprünge" bzw. keine sprunghaften Änderungen in den metallurgischen Eigenschaften jeweils benachbarter metallurgischer Schichten auftreten.

Erfindungsgemäß wird ein Parameter der Gasatmosphäre oder des aus der Fertigungskammer abgezogenen Gasstroms bestimmt, gemessen oder anderweitig ermittelt. Die Bestimmung des Parameters kann entweder innerhalb der Fertigungskammer erfolgen oder außerhalb der Fertigungskammer, beispielsweise in einer Leitung oder einem Behälter, durch die oder in die der Gasstrom strömt.

Je nachdem, wie das Ergebnis des Vergleichs zwischen gemessenem Parameter und dem Sollwert ausfällt, wird der Gasstrom ganz, teilweise oder nicht in die Fertigungskammer zurückgeleitet. Außerdem wird in Abhängigkeit von dem Vergleichsergebnis ein Prozessgas in die Fertigungskammer geleitet oder nicht geleitet. Das Prozessgas kann hierbei ein reines Gas oder auch ein Gasgemisch sein. Menge, Druck, Temperatur, Zusammensetzung und/oder Strömungsgeschwindigkeit oder auch andere das Prozessgas charakterisierende Größen können in Abhängigkeit von dem Ergebnis des Vergleichs zwischen gemessenem Parameter und Sollwert variiert werden.

Im Zuge der Erzeugung jeder metallurgischen Schicht herrscht insbesondere in der kompletten Fertigungskammer jeweils eine isotrope homogene Gasatmosphäre mit der jeweiligen Gaszusammensetzung. Durch diese jeweils isotrope Gasatmosphäre können auf einfache, aufwandsarme und kostengünstige Weise die metallurgischen Eigenschaften der jeweiligen kompletten metallurgischen Schicht entsprechend verändert werden. Somit ist es nicht notwendig, bestimmte Gase gezielt zu bestimmten Bereichen des aufschmelzenden Werkstoffs zuzuführen.

Vorzugsweise wird die Gaszusammensetzung für jede oder mehrere der metallurgischen Schichten jeweils derart gewählt, dass die metallurgischen Eigenschaften der jeweiligen metallurgischen Schicht(en) jeweils auf vorgegebene Werte eingestellt werden. Durch die Wahl der Gaszusammensetzung werden somit die metallurgischen Eigenschaften jeder metallurgischen Schicht gezielt beeinflusst. Die Sollwerte für die gemessenen Parameter werden entsprechend gewählt und können zwischen verschiedenen Schichten variieren. Somit können die metallurgischen Eigenschaften benachbarter metallurgischer Schichten besonders einfach aneinander angepasst bzw. aufeinander abgestimmt werden. Insbesondere hängt der eingestellte Wert einer metallurgischen Eigenschaft einer speziellen metallurgischen Schicht jeweils von dem eingestellten Wert dieser metallurgischen Eigenschaft der jeweils benachbarten metallurgischen Schicht ab.

Bevorzugt wird die Gaszusammensetzung für jede oder mehrere der metallurgischen Schicht(en) jeweils derart gewählt, dass die Werte der metallurgischen Eigenschaften jeweils benachbarter metallurgischer Schichten jeweils maximal um einen vorgegebenen Schwellwert voneinander abweichen. Dieser Schwellwert wird insbesondere derart gewählt, dass zwischen den jeweils benachbarten metallurgischen Schichten keine metallurgische Kerbe entsteht. Vorzugsweise beträgt dieser Schwellwert 5%, weiter insbesondere 2,5%, weiter insbesondere 1% einer oder mehrerer metallurgischer Eigenschaften (siehe unten zu hierbei verwendbaren metallurgischen Eigenschaften).

Durch zweckmäßige Wahl des Schwellwerts kann insbesondere ein sanfter, fließender Übergang zwischen den metallurgischen Eigenschaften jeweils benachbarter metallurgischer Schichten gewährleistet werden. Weiterhin wird durch zweckmäßige Wahl des Schwellwerts gewährleistet, dass die Änderung der metallurgischen Eigenschaften entlang der Ausbreitungsrichtung bzw. Längsausdehnung des Werkstücks dem entsprechenden Gradienten, Profil bzw. der entsprechenden Verteilung folgt.

Das erfindungsgemäße Verfahren kann nicht nur zur Aufrechterhaltung einer gewünschten Gasatmosphäre in der Fertigungskammer dienen, sondern auch dazu, bestimmte, insbesondere geringfügige, Veränderungen der Gasatmosphäre herbeizuführen. Der Sollwert für den Vergleich mit dem gemessenen Parameter des Gasstroms oder der Gasatmosphäre wird dazu entsprechend geändert. Weicht der bestimmte Parameter vom Sollwert ab, so wird der aus der fertigungskammer abgezogene Gasstrom verworfen und ein Prozessgas mit der gewünschten Zusammensetzung wird in die Fertigungskammer eingespeist. In diesem Fall ist es insbesondere nicht notwendig, die aktuell in der Fertigungskammer vorhandene Gasatmosphäre vor dem Erzeugen einer neuen metallurgischen Schicht komplett aus der Fertigungskammer zu entfernen. Dadurch dass die Gasatmosphäre ohnehin kontinuierlich im Kreis geführt und durch Messung eines oder mehrerer Parameter kontrolliert wird, kann der entnommene Gasstrom solange abgeführt und durch ein Prozessgas gewünschter Zusammensetzung ersetzt werden, bis die Abweichung zwischen gemessenem Parameter und Sollwert unter eine vorgegebene Grenze fällt.

Bevorzugt werden durch die jeweilige Gaszusammensetzung der Gasatmosphäre in der Fertigungskammer eine Kriechfestigkeit, eine Härte, eine Steifigkeit, eine thermische Leitfähigkeit, eine elektrische Leitfähigkeit, ein Schmelzpunkt, eine Korrosionsbeständigkeit, eine Abnutzungs- bzw. Verschleißbeständigkeit, eine Duktilität, elektromagnetische Eigenschaften und/oder eine Porosität als metallurgische Eigenschaften der jeweiligen metallurgischen Schichten des Werkstücks verändert.

Bevorzugt wird das Werkstück aus einem niedrig schmelzenden Metall hergestellt. Zu diesem Zweck wird für jede metallurgische Schicht jeweils das niedrig schmelzende Metall als metallischer Werkstoff bereitgestellt. Als niedrig schmelzende Metalle werden hierbei Metalle angesehen, die einen Schmelzpunkt von maximal 1500 °C aufweisen, bevorzugt von maximal 1200 °C, weiter bevorzugt von maximal 1000 °C und mindestens 500 °C. Beispielsweise werden Aluminium, Zinn, Blei, Zink und/oder Silber bzw. entsprechende Mischungen bzw. Legierungen als niedrig schmelzende Metalle verwendet. Entsprechende Legierungen können auch aus unterschiedlichen metallischen Werkstoffen erzeugt werden, indem unterschiedliche Komponentengemische eingebracht werden.

Weiter bevorzugt wird das Werkstück nicht aus einem Refraktärmetall bzw. einem hoch schmelzenden Metall hergestellt. Demgemäß wird bevorzugt kein Refraktärmetall bzw. kein hoch schmelzendes Metall als metallischer Werkstoff aufgeschmolzen. Refraktärmetalle bzw. hoch schmelzende Metalle weisen insbesondere einen Schmelzpunkt von mindestens 1500 °C auf. Bei derartig hohen Temperaturen verhalten sich Gase anders, als bei vergleichsweise niedrigen Temperaturen von insbesondere maximal 1500 °C. Eigenschaften von Gasen sowie ablaufende Reaktionen sind bei derartig hohen und derartig niedrigen Temperaturen deutlich unterschiedlich. Insbesondere gelten bei den hohen Temperaturen andere Gesetze der Thermodynamik als bei derartig niedrigen Temperaturen. Bei hohen Temperaturen ist es insbesondere sehr viel aufwendiger, spezielle metallurgische Eigenschaften der metallurgischen Schichten zu erzeugen, als bei niedrigen Temperaturen. Es ist jedoch möglich, Refraktärmetalle oder andere Komponenten, beispielsweise zur Herstellung von besonders abriebfesten Werkstücken, in eine Matrix aus niedrig schmelzenden Metallen einzubetten, beispielsweise um Verbundmaterialien zu schaffen.

Insgesamt umfasst das Werkstück damit jedoch bevorzugt ein niedrig schmelzendes Metall und das Laserschmelzen wird bevorzugt bei niedrigen Temperaturen von maximal 1500 °C, weiter bevorzugt von maximal 1200 °C, weiter bevorzugt von maximal 1000 °C, durchgeführt. Bei derartig niedrigen Temperaturen kann das Werkstück einfach, aufwandsarm und kostengünstig hergestellt werden.

Die Gasatmosphäre in der Fertigungskammer kann aus einem inerten Gas, wie zum Beispiel Argon, bestehen. Soll die inerte Gasatmosphäre über den gesamten Verlauf des Herstellungsverfahrens aufrechterhalten werden, so wird beispielsweise der Sauerstoffgehalt oder der Wasserdampfgehalt der Gasatmosphäre oder des abgezogenen Gasstroms bestimmt und bei Überschreiten eines bestimmten Sollwerts für den Sauerstoffgehalt oder den Wasserdampfgehalt wird der Gasstrom nicht mehr oder nicht mehr komplett in die Fertigungskammer zurückgeleitet, sondern durch einen aus Argon bestehenden Prozessgasstrom (teilweise) ersetzt.

In einer anderen Ausführungsform wird für die metallurgischen Schichten eine Gaszusammensetzung als Gasatmosphäre jeweils aus einem reinen Reaktivgas oder aus einem Gasgemisch mit wenigstens einem Reaktivgas als Gaskomponente verwendet. Insbesondere wird ein Gasgemisch verwendet, das ausschließlich unterschiedliche Reaktivgase als Gaskomponenten aufweist. Durch die Konzentration der einzelnen Reaktivgase der Gasatmosphäre werden insbesondere die gewünschten metallurgischen Eigenschaften der jeweiligen metallurgischen Schicht erzeugt. Vorzugsweise wird der Gasatmosphäre dann ein Prozessgas zugeführt, welches ebenfalls eines oder mehrere der folgenden Reaktivgase umfasst: Wasserstoff, Sauerstoff, Stickstoff, Helium, Kohlenmonoxid, Kohlendioxid und/oder Kohlenwasserstoffen. Das Prozessgas kann außerdem auch ein Gasgemisch aus einem inerten Gas und einem Reaktivgas sein.

Beispielsweise kann durch die Verwendung von Stickstoff in der Gaszusammensetzung und durch die kontrollierte Zufuhr von Stickstoff als Prozessgas die Kriechfestigkeit, Härte und/oder Steifigkeit als metallurgische Eigenschaften der jeweiligen metallurgischen Schichten des Werkstücks verändert werden. Insbesondere werden durch den Stickstoff in den jeweiligen metallurgischen Schichten Nitride erzeugt, welche zu erhöhter Kriechfestigkeit, Härte und/oder Steifigkeit führen.

Durch die Verwendung von Kohlendioxid in der Gaszusammensetzung für die Gasatmosphäre und durch die kontrollierte Zufuhr von Kohlendioxid als Prozessgas können in den jeweiligen metallurgischen Schichten beispielsweise Karbide erzeugt werden. Durch Kohlendioxid in der Gaszusammensetzung können Härte und/oder Abnutzungs- bzw. Verschleißbeständigkeit als metallurgische Eigenschaften der metallurgischen Schichten des Werkstücks verändert werden.

Durch die Verwendung von Sauerstoff in der Gaszusammensetzung und durch die kontrollierte Zufuhr von Sauerstoff als Prozessgas können in den jeweiligen metallurgischen Schichten Oxide, insbesondere Metalloxide erzeugt werden. Auf diese Weise kann insbesondere die Duktilität bzw. Dehnbarkeit und Verformbarkeit als metallurgische Eigenschaften der jeweiligen metallurgischen Schichten des Werkstücks verändert werden.

Beispielsweise können durch Verwendung von Wasserstoff in der Gaszusammensetzung und durch die kontrollierte Zufuhr von Wasserstoff als Prozessgas spröde, brüchige Schichten des Werkstücks erzeugt werden. Auf diese Weise können Sollbruchstellen in dem Werkstück erzeugt werden.

Vorteilhafterweise wird eine Gaszusammensetzung für die Gasatmosphäre verwendet, die weniger Sauerstoff als Luft unter Normalbedingungen enthält. Bevorzugt beträgt der Anteil an Sauerstoff der Gaszusammensetzung zwischen 0,01% und 21%. Durch eine derartige Gaszusammensetzung wird es ermöglicht, dass unterschiedliche Komponenten der Fertigungskammer (z.B. Ventile, Dichtungen, Schläuche, usw.) verwendet werden können, die aus preisgünstigen Materialien gefertigt sind, welche für Druckluft geeignet sind. Somit ist es nicht notwendig, dass teure Materialien verwendet werden müssen, die explizit für den Gebrauch in sauerstoffreichen Atmosphären zertifiziert sind. Gaszusammensetzungen mit derartigem Sauerstoffanteil eignen sich besonders, um in der Fertigungskammer eine kontrollierte Oxidation bzw. kontrollierte Reaktionen zu ermöglichen. Somit können gewünschte metallurgische Eigenschaften der jeweiligen metallurgischen Schichten eingestellt werden.

Bevorzugt werden eine Gaszusammensetzung für die Gasatmosphäre und ein entsprechendes Prozessgas verwendet, wobei ein Anteil an brennbaren oder explosiven Gasen geringer ist, als die untere Zündgrenze des jeweiligen Gases in der Gaszusammensetzung, weiter bevorzugt geringer als die untere Zündgrenze des jeweiligen Gases in Luft. Als brennbare oder explosive Gase werden insbesondere Wasserstoff und/oder Kohlenwasserstoffe verwendet.

Wenn für die Gaszusammensetzung ein vergleichsweise geringer Sauerstoffanteil gewählt wird oder wenn die Gaszusammensetzung keinen Sauerstoff enthält, ist die Zündgrenze von brennbaren oder explosiven Gasen in der Gaszusammensetzung zumeist größer als in Luft. In derartigen sauerstoffarmen Gaszusammensetzungen kann insbesondere ein vergleichsweise hoher Anteil an brennbaren oder explosiven Gasen gewählt werden. Während des Fertigungsprozesses besteht in einer derartigen sauerstoffarmen Gasatmosphäre trotz erhöhtem Anteil an brennbaren oder explosiven Gasen keine oder zumindest kaum Explosions- bzw. Brandgefahr. Insbesondere wird eine derartige Gasatmosphäre vor Öffnen der Fertigungskammer komplett aus selbiger entfernt, um eine erhöhte Explosions- bzw. Brandgefahr beim Öffnen der Fertigungskammer durch Eindringen von Sauerstoff zu verhindern.

Weiter bevorzugt ist der maximale Anteil an brennbaren oder explosiven Gasen in der Gaszusammensetzung 10% geringer als die Zündgrenze des jeweiligen Gases in der Gaszusammensetzung oder in Luft. Dadurch wird gewährleistet, dass der Anteil der Gase zu keiner Zeit die jeweilige Zündgrenze überschreitet, auch wenn sich der Anteil des jeweiligen Gases beispielsweise aufgrund von Reaktionen der Gasatmosphäre mit dem Werkstück ändert.

Vorzugsweise wird eine Gaszusammensetzung mit einem maximalen Anteil an Kohlenmonoxid von 30 ppm und/oder mit einem maximalen Anteil an Kohlendioxid von 5000 ppm für die Gasatmosphäre verwendet. Das Prozessgas wird dann entsprechend gewählt. Eine derartige Gaszusammensetzung bietet sich insbesondere an, wenn keine Sicherheitsvorkehrung vorhanden ist, durch welche verhindert wird, dass die Fertigungskammer geöffnet werden kann, bevor die Gasatmosphäre komplett entfernt wurde. Durch diese Gaszusammensetzung kann in einem derartigen Fall verhindert werden, dass ein Benutzer oder Mitarbeiter gesundheitliche Schäden erleidet. Wenn eine derartige Sicherheitsvorkehrung vorhanden ist, kann der Anteil an Kohlenmonoxid und/oder Kohlendioxid bevorzugt höher als 30 ppm bzw. 5000 ppm gewählt werden.

Die Erfindung hat zahlreiche Vorteile gegenüber dem Stand der Technik. So kann der Wasserdampfgehalt in der Gasatmosphäre einfach und sicher kontrolliert und eingestellt werden. Eine unerwünschte Porenbildung in den hergestellten Werkstücken wird vermieden. Die Qualität der hergestellten Werkstücke steigt. Aufwändige Nachbehandlungsverfahren zur Beseitigung oder Verringerung der Poren sind nicht notwendig.

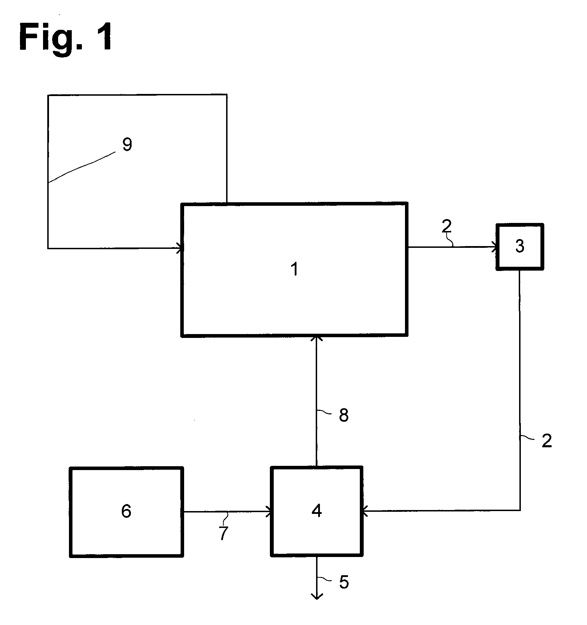

Die Erfindung sowie weitere vorteilhafte Ausgestaltungen der Erfindung sollen anhand der folgenden schematischen Zeichnungen näher erläutert werden. Hierbei zeigt
- Figur 1: eine Fertigungskammer zur additiven Fertigung eines Werkstücks

In Figur 1 ist eine Fertigungskammer 1 zur Herstellung eines Werkstücks durch additive Fertigung schematisch dargestellt. Das fertige Werkstück setzt sich aus unterschiedlichen metallurgischen Schichten zusammen, die einzeln nacheinander erzeugt werden. Die einzelnen metallurgischen Schichten des Werkstücks werden jeweils erzeugt, indem für jede metallurgische Schicht jeweils ein metallischer Werkstoff bereitgestellt und mit einem Laserstrahl beaufschlagt wird. Dies erfolgt unter einer Gasatmosphäre in der Fertigungskammer 1. Die Gasatmosphäre in der Fertigungskammer 1 besteht beispielsweise aus Argon, welches vor dem beginn des Fertigungsverfahrens in die Fertigungskammer 1 eingeleitet wurde.

Erfindungsgemäß wird ein Teil der Gasatmosphäre aus der Fertigungskammer 1 als Gasstrom 2 abgezogen und einer Analyseeinheit 3 zugeführt. In der Analyseeinheit 3 werden ein oder mehrere Parameter des Gasstroms 2 bestimmt. Besteht, wie im beschriebenen Fall die Gasatmosphäre aus einem Inertgas, so ist es häufig sinnvoll, den Wasserdampfgehalt des Gasstroms 2 oder den Sauerstoffgehalt des Gasstroms 2 zu kontrollieren, um festzustellen, ob die Gasatmosphäre noch ausreichend inert ist. Ansonsten besteht beispielsweise die Gefahr, dass sich Poren im Inneren des Werkstücks bilden.

In der Analyseeinheit 3 werden die Parameter, wie zum Beispiel Wasserdampfgehalt oder Sauerstoffgehalt des Gasstroms 2, gemessen und mit einem Sollwert verglichen. Wenn die gemessenen Parameter unterhalb des Sollwerts liegen, das heißt, wenn der Wasserdampfgehalt bzw. der Sauerstoffgehalt niedriger als der vorgegebene Sollwert sind, wird der Gasstrom 2 komplett in die Fertigungskammer 1 zurückgeleitet.

Wenn der Wasserdampfgehalt oder der Sauerstoffgehalt allerdings höher als der Sollwert sind, so wird ein Teil des Gasstroms oder der komplette Gasstrom verworfen. Hierzu wird der analysierte Gasstrom 2 einer Gasregeleinheit 4 zugeführt, die je nach dem Ergebnis des Vergleichs von gemessenem Parameter und Sollwert den Gasstrom 2 entweder in die Fertigungskammer 1 zurückleitet oder einen Teilstrom 5 oder den kompletten Gasstrom 5 abführt oder einer anderen Verwendung zuführt.

Der nicht mehr in die Fertigungskammer 1 zurückgeführte Teil 5 des Gasstroms 2 wird durch ein Prozessgas 6 ersetzt. Im vorliegenden Beispiel wird reines Argon als Prozessgas 6 eingesetzt. Das Prozessgas wird ebenfalls der Gasregeleinheit 4 zugeführt (Strom 7), dem Gasstrom 2 zugemischt und dann in die Fertigungskammer 1 geleitet (Strom 8).

Zusätzlich ist in der Figur 1 noch eine weitere Kreislaufführung 9 gezeigt, welche kontinuierlich einen Teil der Gasatmosphäre aus der Fertigungskammer 1 abzieht und wieder in die Fertigungskammer 1 zurückführt. Auf diese Weise wird eine Umwälzung der Gasatmosphäre und damit Homogenisierung der Gasatmosphäre erreicht.

## Patentansprüche

1. Verfahren zum schichtweisen Herstellen eines metallischen Werkstücks durch additive Fertigung, bei dem metallurgische Schichten des Werkstücks erzeugt werden, indem in einer Fertigungskammer für jede metallurgische Schicht jeweils ein metallischer Werkstoff bereitgestellt und mit einem Laserstrahl beaufschlagt wird, und bei dem bei der Beaufschlagung der Schichten des metallischen Werkstoffs in der Fertigungskammer eine Gasatmosphäre bereitgestellt wird, **dadurch gekennzeichnet, dass** ein Teil der Gasatmosphäre als Gasstrom aus der Fertigungskammer abgezogen wird, zumindest ein Parameter des Gasstroms und/oder der Gasatmosphäre bestimmt und mit einem Sollwert verglichen wird, und in Abhängigkeit von dem Vergleich des Parameters mit dem Sollwert der Gasstrom entweder vollständig, teilweise oder nicht in die Fertigungskammer zurückgeführt wird und in Abhängigkeit von dem Vergleich des Parameters mit dem Sollwert ein Prozessgas der Fertigungskammer zugeführt wird.

2. Verfahren nach Anspruch 1, **dadurch gekennzeichnet, dass** der Wasserdampfgehalt, der Sauerstoffanteil, der Kohlenstoffgehalt und/oder die Temperatur der Gasatmosphäre oder des Gasstroms bestimmt werden.

3. Verfahren nach einem der vorstehenden Ansprüche, wobei für mindestens zwei unterschiedliche metallurgische Schichten unterschiedliche Sollwerte vorgesehen sind.

4. Verfahren nach einem der Ansprüche 2 oder 3, wobei das Prozessgas zugeführt wird, wenn der Wasserdampfgehalt und/oder der Sauerstoffanteil größer als der entsprechende Sollwert sind.

5. Verfahren nach einem der vorstehenden Ansprüche, wobei der Parameter in der Fertigungskammer bestimmt wird.

6. Verfahren nach einem der vorstehenden Ansprüche, wobei für die Gasatmosphäre für die metallurgischen Schichten jeweils ein reines Reaktivgas verwendet wird oder ein Gasgemisch mit wenigstens einem Reaktivgas als Gaskomponente.

7. Verfahren nach Anspruch 6, wobei die Gasatmosphäre Wasserstoff, Sauerstoff, Stickstoff, Helium, Kohlenmonoxid, Kohlendioxid und/oder Kohlenwasserstoffe als Reaktivgas aufweist.

8. Verfahren nach einem der vorstehenden Ansprüche, wobei jeweils niedrig schmelzendes Metall als metallischer Werkstoff bereitgestellt wird.

9. Verfahren nach Anspruch 8, wobei das niedrig schmelzende Metall einen Schmelzpunkt von maximal 1500 °C, insbesondere von maximal 1200 °C, weiter insbesondere von maximal 1000 °C aufweist.
